(19) Europäisches Patentamt
European Patent Office
Office européen des brevets

(11) **EP 2 874 396 A1**

(12) **EUROPEAN PATENT APPLICATION**

(43) Date of publication:
**20.05.2015 Bulletin 2015/21**

(21) Application number: **13193198.2**

(22) Date of filing: **15.11.2013**

(51) Int Cl.:
*H04N 19/132* (2014.01)   *G08B 13/196* (2006.01)
*H04N 19/167* (2014.01)   *H04N 19/174* (2014.01)
*H04N 21/2347* (2011.01)   *H04N 21/4728* (2011.01)
*H04N 21/63* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Everseen Ltd.
Co. Cork (IE)**

(72) Inventors:
• **O'Herlihy, Alan**
  **Co. Cork (IE)**
• **Ciubotaru, Bogdan**
  **Cork (IE)**

• **Cioarga, Razvan**
  **410086 Bihor (RO)**
• **Pescaru, Dan**
  **300351 Timisoara (RO)**
• **Vasile, Gui**
  **300740 Timisoara (RO)**
• **Parvu, Ovidiu**
  **300696 Timisoara (RO)**
• **Doyle, Gavin**
  **Co. cork (IE)**

(74) Representative: **Skrba, Sinéad et al**
**Tomkins & Co.
5 Dartmouth Road
Dublin 6 (IE)**

(54) **Method and system for securing a stream of data**

(57)   A method of securing a stream of video surveillance data, comprising: extracting a region of interest from each frame in the stream of surveillance data; encoding the extracted region of interest; removing the encoded region of interest from each frame in a first copy of the stream of video surveillance data to create a non-sensitive stream of surveillance data; removing all data except the encoded region of interest from each frame in a second copy of the stream of surveillance data to create a sensitive stream of surveillance data; and separately storing the sensitive stream of data and the non-sensitive stream of data.

Figure 3

## Description

## Technical Field

The invention relates to a method and system for securing a stream of data and in particular retail video surveillance data.

## Background Art

Data protection becomes an issue when sensitive data leaves the retail environment for further processing. The location change can make the sensitive data prone to unauthorised access. Processing techniques such as that disclosed in WO 2006/070249 A (EMITALL SURVEILLANCE S A) 27/12/2004 2004 scramble or encrypt the sensitive information. Regions of interest within a scene are scrambled to protect the privacy of human faces and objects captured by the system. A disadvantage with these systems is that they leave the encrypted or scrambled data within the video stream. If the data is scrambled it may not be available, even for authorised viewing, while the encrypted data may still be susceptible for unauthorised decryption, as it is sent concurrently with the main video stream. It is therefore desirable to provide an improved method and system for data protection.

## Summary of invention

The invention as described herein with reference to the appended claims is directed to a method of securing a stream of video surveillance data, comprising: extracting a region of interest from each frame in the stream of surveillance data; encoding the extracted region of interest; removing the encoded region of interest from each frame in a first copy of the stream of video surveillance data to create a non-sensitive stream of surveillance data; creating a sensitive stream of surveillance data comprising only the removed encoded region of interest; and separately processing the sensitive stream of data and the non-sensitive stream of data.

It will be appreciated that the separation of the streams of data provides improved security and data protection.

Separately processing may comprise segmenting the encoded region of interest into a plurality of segments.

The above embodiment may further comprise assigning an identifier and a location to each segment of the plurality of segments.

The method may further comprise applying a distribution function to the plurality of segments and assigning each segment of the plurality of segments to a separate storage location based on the distribution function.

Applying a distribution function may comprise encrypting each segment of the plurality of segments.

Assigning each segment of the plurality of segments may comprise transferring each segment of the plurality of segments to the assigned storage location.

Processing the sensitive stream of data may comprise encrypting the sensitive stream of data and transferring the stream of data to a data storage location.

The method described above may further comprise associating each extracted region of interest with a privacy level based on an auditing rule.

The auditing rule may comprise an object of interest and a privacy level associated with the object of interest.

An object of interest may include a face, a payment card, or other personal data.

Extracting a region of interest may comprise applying object detection, pattern recognition and tracking techniques to identify an object of interest within a region of the video frame.

Sensitive stream of surveillance data may be processed according to the privacy level.

Each privacy level may have a defined processing action selected from the list including removing, storing, transmitting over a secure channel or transmitting over a non-secure channel and processing according to the privacy level comprises applying the corresponding processing action.

The non-sensitive stream of surveillance data may also be processed.

Processing the non-sensitive stream of data may comprise assigning a stream identifier.

Encoding the extracted region of interest may comprises defining a group of macroblocks corresponding to the region of interest and encoding the group of macroblocks independently of other groups of macroblocks corresponding to other regions of interest within a same frame.

The group of macroblocks corresponding to a region of interest may define a slice in accordance with advanced video coding standards.

Removing the encoded region of interest may comprise removing the slice corresponding to the region of interest.

A further configuration may comprise grouping slices assigned to corresponding regions of interest into one or more slice groups wherein encoding the region of interest comprises encoding slice groups.

Corresponding regions of interest may have equivalent privacy levels.

The privacy level may define a clearance level at a decoder.

A further embodiment of the present invention includes a system for securing a stream of video surveillance data, comprising:

  means for extracting a region of interest from each frame in the stream of surveillance data;
  means for encoding the extracted region of interest;
  means for removing the encoded region of interest from each frame in a first copy of the stream of video surveillance data to create a non-sensitive stream of surveillance data; means for creating a sensitive stream of surveillance data comprising only the removed encoded region of interest; and means for separately processing the sensitive stream of data and the non-sensitive stream of data.

Means for separately processing may comprise means for segmenting the encoded region of interest into a plurality of segments.

The system may further comprise means for assigning an identifier and a location to each segment of the plurality of segments.

The system may further comprise means for applying a distribution function to the plurality of segments and assigning each segment of the plurality of segments to a separate storage location based on the distribution function.

Means for applying a distribution function may comprise means for encrypting each segment of the plurality of segments.

Means for assigning may comprise means for transferring each segment of the plurality of segments to the assigned storage location.

Means for processing the sensitive stream of data may comprise means for encrypting the sensitive stream of data and transferring the stream of data to a data storage location.

The system may further comprise means for associating each extracted region of interest with a privacy level based on an auditing rule.

The auditing rule may comprise an object of interest and a privacy level associated with the object of interest.

An object of interest may include a face, a payment card, or other personal data.

Means for extracting a region of interest may comprise means for applying object detection, pattern recognition and tracking techniques to identify an object of interest within a region of the video frame.

The system may further comprise means for processing sensitive stream of surveillance data according to the privacy level.

Each privacy level may have a defined processing action selected from the list including removing, storing, transmitting over a secure channel or transmitting over a non-secure channel and processing according to the privacy level may comprise applying the corresponding processing action.

The system may further comprise means for processing the non-sensitive stream of surveillance data.

Means for encoding the extracted region of interest may comprise means for defining a group of macroblocks corresponding to the region of interest and encoding the group of macroblocks independently of other groups of macroblocks corresponding to other regions of interest within a same frame.

The group of macroblocks corresponding to a region of interest may define a slice in accordance with advanced video coding standards.

Means for removing the encoded region of interest may comprise means for removing the slice corresponding to the region of interest.

The system may further comprise means for grouping slices assigned to corresponding regions of interest into one or more slice groups wherein encoding the region of interest comprises encoding slice groups.

Corresponding regions of interest may have equivalent privacy levels.

The privacy level may define a clearance level at a decoder.

A further embodiment of the present invention includes a method for retrieving a secured stream of video surveillance data, comprising:

  obtaining a non-sensitive stream of surveillance data and a sensitive stream of surveillance data; separately decoding the non-sensitive stream and the sensitive stream; and combining the decoded non-sensitive stream and the decoded and decrypted sensitive stream.

Obtaining a sensitive stream of surveillance data may comprise:

  retrieving a sensitive stream identifier; retrieving a segment location for each segment of the stream; and determining a location based on the segment location and the stream identifier.

The method may further comprise for each segment of the stream generating an encryption key based on the retrieved stream identifier and the segment location.

The method may further comprise retrieving each segment of the stream from the determined location.

The method may further comprise decrypting each segment of the stream.

The method may further comprise retrieving a sensitive stream identifier and retrieving the sensitive stream from a data storage location.

Combining the decoded streams may comprise overlaying all decoded frames corresponding to the same time slot within each of the decoded streams.

A further embodiment of the present invention includes a retrieval system for retrieving a secured stream of video surveillance data, comprising:

  means for obtaining a non-sensitive stream of surveillance data and a sensitive stream of surveillance data; means for separately decoding the non-sensitive stream and the sensitive stream; and means for combining the decoded non-sensitive stream and the decoded and decrypted sensitive stream.

Means for obtaining a sensitive stream of surveillance data may comprise:

means for retrieving a sensitive stream identifier; means for retrieving a segment location for each segment of the stream; and
means for determining a location based on the segment location and the stream identifier.

The system may further comprise means for generating an encryption key based on the retrieved stream identifier and the segment location for each segment of the stream.
The system may further comprise means for retrieving each segment of the stream from the determined location.
The system may further comprise means for decrypting each segment of the stream.
The system may further comprise means for retrieving a sensitive stream identifier and retrieving the sensitive stream from a data storage location.
Means for combining the decoded streams may comprise means for overlaying all decoded frames corresponding to the same time slot within each of the decoded streams.
The system may further comprise means for decoding the sensitive stream further comprises means for decrypting the sensitive stream.
Means for combining the decoded streams may comprise means for overlaying all decoded frames corresponding to the same time slot within each of the decoded streams.
A further embodiment of the present invention includes a retail management system comprising the security system as described above and a retrieval system as described above.
The retail management system may further comprise a point of sale terminal and means for recording a video stream of the point of sale terminal.
The retail management system may further comprise means for analysing the combined streams of data.
The retail management system may further comprise means for reporting the analysis.
A further embodiment of the present invention includes a method of retail management comprising:

obtaining a stream of surveillance data;
extracting a region of interest from each frame in the stream of surveillance data;
encoding the extracted region of interest;
removing the encoded region of interest from each frame in a first copy of the stream of video surveillance data to create a non-sensitive stream of surveillance data; creating a sensitive stream of surveillance data comprising only the removed encoded region of interest; and
separately processing the sensitive stream of data and the non-sensitive stream of data.
obtaining the stored non-sensitive stream of surveillance data and non-sensitive stream of surveillance data;
separately decoding the non-sensitive stream and the sensitive stream; and
combining the decoded non-sensitive stream and the decoded and decrypted sensitive stream.

Obtaining the stream of surveillance data may comprise recording point of sale information.
The method may further comprise analysing the combined streams of data.
The method may further comprise reporting the analysis of the combined stream of data.
There is also provided a computer program comprising program instructions for causing a computer program to carry out the above method, which may be embodied on a record medium, carrier signal or read-only memory.

## Brief description of drawings

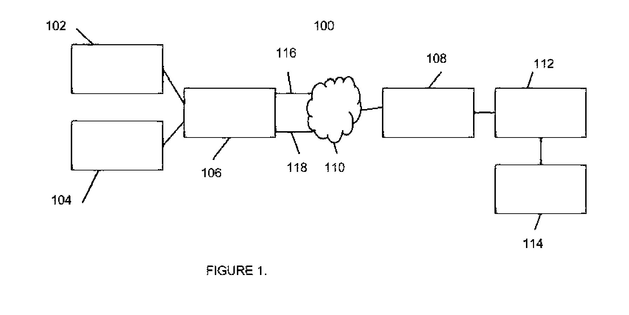

The invention will be more clearly understood from the following description of an embodiment thereof, given by way of example only, with reference to the accompanying drawings, in which:-
**[0071]** Figure 1 is a schematic diagram of an embodiment of a retail management system in accordance with an aspect of the present invention.
Figure 2 is a schematic of a security system for deployment in a retail management system of figure 1.
Figure 3 is a flow chart of a compression process in accordance with one embodiment of the invention.
Figure 4 is a flow chart of a decompression process implemented at a retrieval system in accordance with one embodiment of the invention.
Figure 5 is a flow chart of one method for processing the sensitive stream of data in accordance with the present invention.
Figure 6 is a flow chart of an alternative or additional method for processing the sensitive stream of data in accordance with the present invention.
Figure 7 is a flow chart of a method of retrieving the sensitive stream of data processed in accordance with the method of figure 5.
Figure 8 is a flow chart of a method of retrieving the sensitive stream of data processed in accordance with the method of figure 6.

## Description of embodiments

In an embodiment of the invention, as depicted in **Figure 1**, a retail management system 100 comprises a Point of Sale (POS) terminal 102, a video camera 104, and a security system 106 associated therewith, a network 110, a retrieval system 108, an analysis module 112 and a reporting module 114. It will be appreciated that multiple POS terminals and multiple cameras may interact with a single security system or a separate security system may be assigned to each video camera, POS terminal combination. In accordance with the present invention, at the security system the stream of data is divided into a secure or sensitive and an un-secure or non-sensitive data stream and transmitted separately 116, 118 over a network to a data retrieval system 108. Additionally or alternatively, the secure and un-secure data stream may be stored in a memory unit for later retrieval by the retrieval system 108. Data may be transmitted concurrently on the separate transmission systems; however, in a preferred configuration the secured and unsecured data are transmitted at different times.

At the retrieval system, the secured and un-secure data is recombined for analysis 112. In an embodiment, analysis is carried out by a quality analyst. Alternatively or additionally analysis is carried out automatically using a software module executed by a processing module.

Where a quality analyst is carrying out the analysis, the quality analyst physically reviews the recombined streams and records or reports incidents 114. A log of incidents is also preferably stored for subsequent review. An incident may include fraud at the POS, theft, inaccurate scanning, etc. Alternatively, an incident may include sale of a particular item, for marketing and tracking of consumer behaviour.

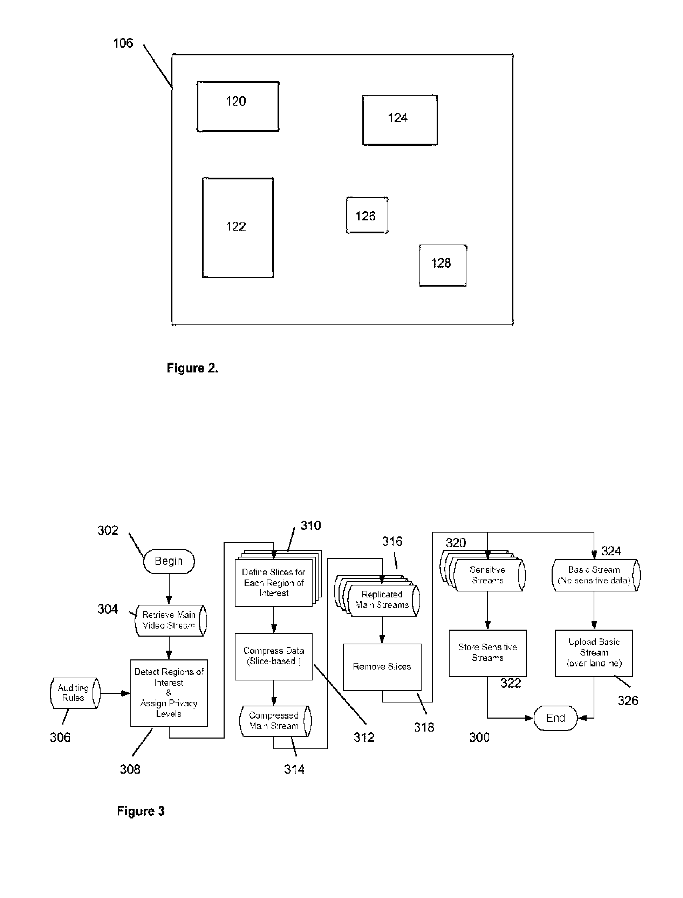

An embodiment of the security system 106 as shown in the configuration of **Figure 2** comprises a transceiver 120, a rules database 122 and a processing module 124. Optionally, the security system 106 includes a plurality of memory modules 126, 128. The memory modules 126, 128 may be integral to the transceiver or the processing module or separate components of the security system 106. The transceiver 120 is configurable to receive the video stream and the POS data and transmit the separate streams of secure or sensitive and un-secure data or non-sensitive data.

Separate transceivers may be implemented for the receipt of the POS data, and also for the transmission of the secure and unsecured data. It will be appreciated that the separate streams may be stored in the memory modules 126. 128 for subsequent retrieval or transmission.

The function of the security system is shown in further detail in **Figure 3.** The security system is initiated 302. A stream of video is retrieved either directly from a video camera or from a separate storage location. Accordingly, the security system may act approximately contemporaneously with the actions being recorded or at a later time.

POS information may also be retrieved and stored for subsequent referral or analysis.

Within each frame of the video stream, regions of interest are identified or extracted 308. These regions of interest include the face of the customer, the payment card details of the customer or other personal data that is identifiable in the video stream. Auditing rules are obtained 306 from the rules database 122 and applied to the regions of interest in the video stream. Square coordinates may be used to identify the regions of interest.

In one embodiment, these auditing rules comprise selected objects of interest and privacy levels associated with these objects of interest. Objects of interest include credit cards or other payment cards, facial features, other personal characteristics or traits associated with individuals in the video stream or any other personal data which may be identified in the video stream.

It will be appreciated that objects of interest are definable based on local privacy legislation specific to the location of the retail environment. Additional objects of interest may be defined based on the requirements of the retailer. Privacy levels are associated with each object of interest such that the sensitivity of the information included in each object of interest can be categorised. For example, payment card details are assigned level 0 and a face may be assigned a level 1. It will be appreciated that the level associated may be in ascending order or descending order and may have any configuration.

Identified regions of interest are associated with the auditing rules. This results in a privacy level being assigned to each region of interest extracted.

To extract the region of interest 308 a variety of video processing techniques may be used. Techniques include applying object detection, pattern recognition and other tracking techniques that identify regions of interest within each frame.

The extracted regions of interest are then compressed and encoded separately to the main stream. In an embodiment encoding the extracted region of interest comprises defining a group of macroblocks corresponding to the region of interest. These groups of macroblocks are then encoded independently of other groups of macroblocks corresponding to other regions of interest within the same frame and other data within the same frame.

In the embodiment shown in figure 3, this independent encoding is implemented in accordance with the H.264/MPEG-4 PART 10 or AVC(advanced video coding) video compression format. In accordance with this format, the regions of interest are allocated to a specific slice, which are separately encoded compressed 312. Additionally or alternatively the slices may be grouped into slice groups, for example, in compliance with Flexible Macroblock Ordering techniques. Slices or slice groups are compressed 312. The main stream of data is also compressed to form a compressed stream of data 314.

For each region of interest identified 308 and assigned a privacy level in accordance with the auditing rules, a copy of the stream of video data is made 316. This results in an equal number of video stream copies and regions of interest.

For each region of interest identified, the group of macroblocks or slice or slice group is removed from the copy of the stream. Each copy of the stream is processed, once as a sensitive or secure stream where only the removed groups of macroblocks, slices or slice groups are maintained and a second time as a non-sensitive, basic or non-secure stream, where everything except the groups of macroblocks slices or slice groups are maintained.

The sensitive or secure stream and the basic stream are then separately and securely processed by the security system 106. In the embodiment shown in Figure 3, the sensitive stream is stored for later retrieval. The basic stream may be transmitted to a retrieval location or otherwise uploaded to a storage location for example over a phone line, wirelessly or any other method. The separate handling of the sensitive and non-sensitive data results in additional security and a lower risk of the information being accessed by unauthorised persons or systems.

Sensitive data is handled, in one configuration, based on the auditing rules. Depending on the privacy levels associated with the objects of interest in the regions of interest, actions may include discarding sensitive data, transporting encrypted data, storing encrypted data, storing unencrypted data or decoding the data.

It will be appreciated that the method and system proposed decouples the sensitive video data stream from the non-sensitive video data stream and allows the two sets of data to be sent over separate routes and at distinct moments in time making it more difficult for unauthorized persons to obtain both streams necessary to restore the original image.

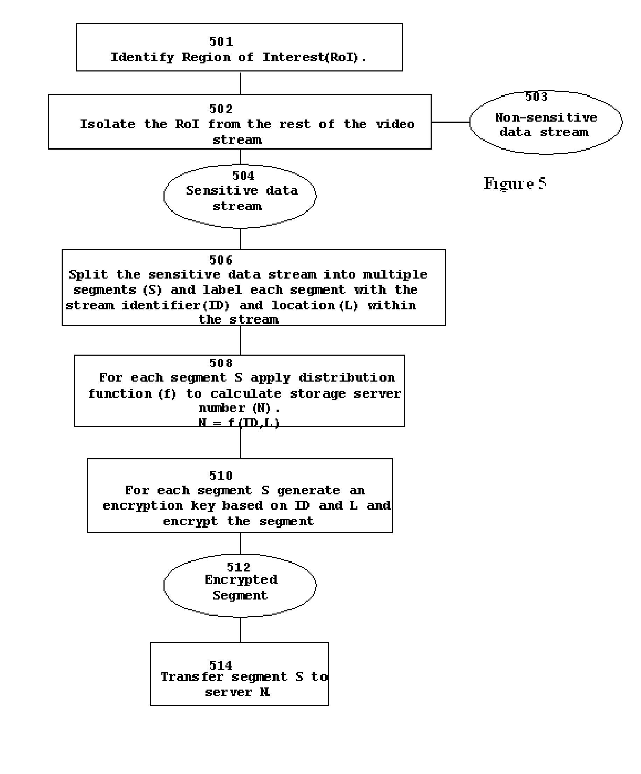

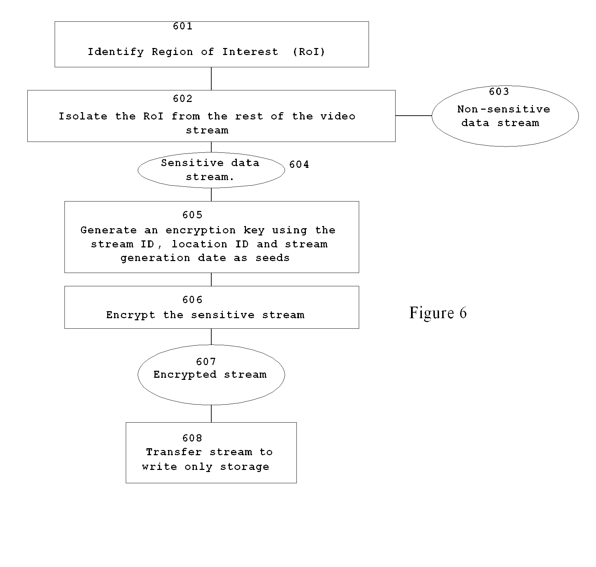

The embodiments shown in **figures 5 and 6** outline methods for handing the separated streams of data. The methods presented may be alternative or complementary.

As outlined above, regions of interest are identified 501, 601 and isolated from the rest of the video stream 502, 602 to provide a non-sensitive stream 503, 603 and sensitive stream 504,604 of data. The location of the regions of interest are determined. Locations are stored as metadata within the stream or in a separate index file. The ROI is tagged with a unique identifier. In an embodiment, this unique stream identifier (ID) comprises an integer number generated from a string of date, time location and channel. The channel may comprise a cyclic redundancy check computed on a specific string. A corresponding stream identifier is assigned to the non-sensitive data stream.

In the embodiment of figure 5, the regions of interest forming the sensitive data stream are segmented 506 into a plurality of segments S. Each segment is labelled with a stream identifier (ID) and location (L) within the stream, 506. The location L is the location of the segment within the region of interest. The location may be stored as metadata or an index file.

For each segment S, a distribution function f (x) is used to calculate a storage server number N, 508.

$$N = f(ID, L)$$

For each segment S an encryption key based on the stream identifier ID and location L is used, 510, to encrypt the segment, 512.

Each encrypted segment 512 is then transferred to the storage server identified in step 508.

The storage servers may be a bank of processing modules or memory locations networked or in communication with the security system 106.

Alternatively or additionally, as outlined in **Figure 6,** an encryption key is generated, 605. In the embodiment shown, the encryption key is generated using the stream ID, a location ID and stream generation date as seeds. It will be appreciated that the generation of an encryption key is not restricted as such. The sensitive stream of data is encrypted 606 using the encryption key. The encrypted stream is then transferred 608 to a write only storage location.

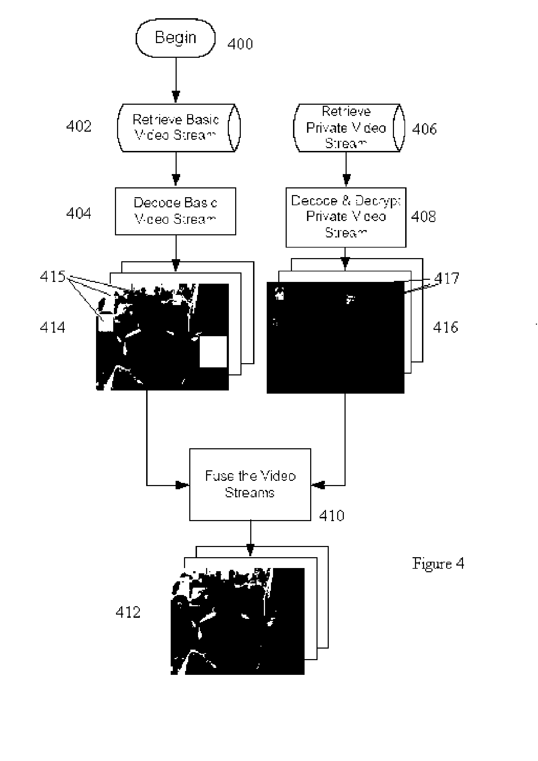

An embodiment of the retrieval system 108 is explained in further detail in **figure 4.**

Following initialisation 400 of the retrieval system 108 the separate streams are retrieved 402, 406. These separate streams may be retrieved over the network, from separate storage locations or from any other location.

The unsecured video stream is decoded. This results in a decoded data stream where the regions of interest are blanked out 415 as shown in 414. Similarly, the private or secured video stream is decoded and decrypted 408. This results in a decoded data stream where only the regions of interest remain as shown in 416. The decoded frames will have the area 417 corresponding to the missing slices from the unsecured video stream.

The decoded streams are then fused, aggregated or overlaid 410 so that the original video stream 412 is available for analysis. This analysis is implemented at the analysis module 112 shown in figure 1.

In use, the aggregated data is received at a data analysis module 112 where a retail management agent assigns parts or all of the aggregated data to for analysis. In at least one embodiment, a processor analyses the aggregated data for any previously unknown patterns within the data, or for patterns that deviate slightly from those already defined by the previously defined auditing rules. These auditing rules correspond to those stored at the rules database 122. The processor may implement a machine learning algorithm which records these data patterns for incorporation into the rules database 120, should the data pattern be identified as corresponding to an event that is to be monitored in the future.

The processor runs an incident analysis routine that analyses the processed video stream and POS data previously obtained in order to establish patterns that correspond to an incident. Typically, the incident analysis routine is a video content analysis routine. In one non-limiting example, the change in movement of a scanned item associated with a "sweethearting" within CCTV data can be cross-referenced with the scan of a low value item at a POS to determine that an event of "sweethearting" is likely to occur.

In at least one embodiment, the analysis includes data structures which detail for example any of the following the management structure, staff rosters, layout, stock levels and historical sales data of each store 102a-d. This allows, for example, an analysis to be carried out as to which employees are present when an event occurs and/or which areas of the store 102a-d are most susceptible to stock loss etc.

The above detailed usage of the retrieval system provides an overview of the situation of a single store location. However, in many retail operations the estate extends over a multiplicity of locations. The retrieval module receives processed data relating to each store from its respective retail security module 106 and runs an intelligent organisational modelling (IOM) routine in relation to the processed data. The IOM routine collates all of the processed data to establish patterns within it. The establishment of these patterns allows for their inclusion into further rules to be introduced into the rules database once the cause of these patterns has been correlated to an action or type of incident. Once established as such, the relative thresholds for flagging the incidents can be accurately and intelligently set by the software, and dynamically monitored and altered by the software as more data becomes available over time to improve the accuracy of detection.

Once the IOM routine at the analysis module has analysed the data it generates output alerts that are to be sent to the reporting module 114. This reporting module may be which is also resident upon the data analysis modules 106. The reporting module determines the reporting structure for example, which level of management should be informed of an incident dependent upon, for example the severity of the incident. For example, a single instance of "sweethearting" may be deemed suitable for reporting to a store manager, in order that they can deal with it. However, a repeated instance of stock loss from a storeroom may be considered suitable for reporting to a regional manager, as it cannot be guaranteed that a store duty manager, or overall manager was not complicit. In an extreme case, the reporting module may determine that the incident should be elevated directly to the chief executive officer, or owner, 130d of a retail group.

Furthermore, the reporting module 114 may actively retain historic data and compares real-time data with such historic data. This allows for trends in incidents to be established and for appropriate elevation or demotion of the level of management hierarchy to which an alert is directed. For example, the failure to address an issue that is prevalent in a region by a regional manager may be escalated to an operations manager Conversely, where a regional manager was being sent alerts related to an issue within in his area alerts relating to this issue can be demoted to local managers, where there are only localised instances of the issue occurring, indicating that the regional problem has been adequately addressed.

The network 110 for transmitting the secure and non-secure streams of data may include for example, for a mobile telephone a GSM, CDMA or UTMS network can be employed and for a laptop etc., the Internet and where appropriate a wireless network.

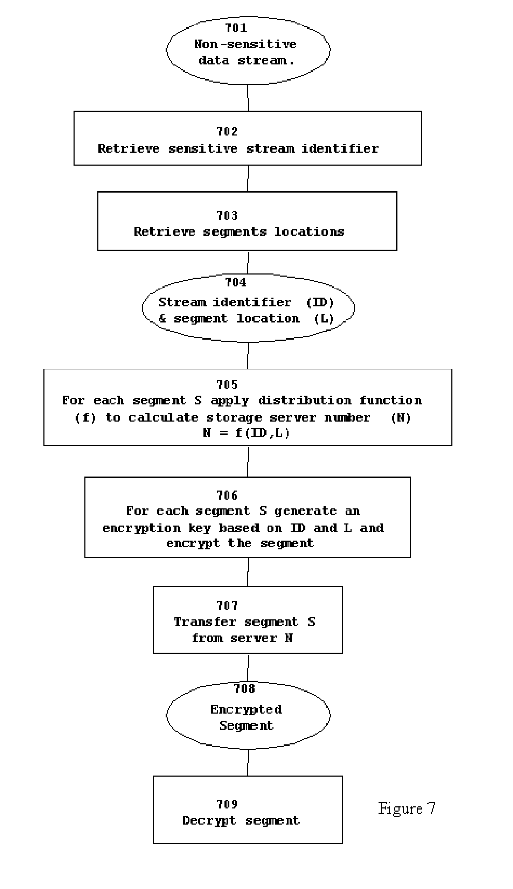

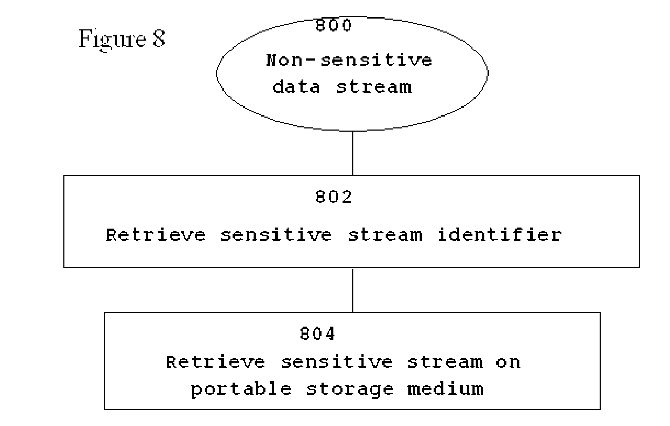

As outlined above retrieval of the separate streams is further outlined in **Figures 7 and 8.**

The non-sensitive data stream is retrieved from its storage location 703. The non-sensitive stream is identified based on information such as date, time, location and channel generated as described above for the sensitive data stream.

From the disclosure above the non-sensitive stream comprises blanks or voids corresponding to the sensitive information removed. The location of the region of interest within the stream, L, is therefore retrievable. The stream identifier (ID) and the location L are therefore known and a distribution function f corresponding to that applied in step 508 is applied 705 to calculate the storage server number where the relevant segment of the region of interest is stored. It will be appreciated that the function can be changed regularly and the relevant function distributed to security and retrieval systems. This increases the security of the secure stream.

Additionally, an encryption key is generated for each segment 706 based on the stream ID and also the location. The encrypted segment 708 is retrieved from the storage server 707. The retrieved encrypted segment 708 is then decrypted using the generated encryption key.

Additionally or alternatively, where the full secure stream has been stored, the system of Figure 8 can be used to retrieve the full secure stream.

As outlined above in relation to step 701, the non-sensitive stream is analysed to determine the stream ID 802. An encryption key is generated based on the ID and the sensitive stream is decrypted using this key. The sensitive stream can therefore be retrieved from the secure storage location 804.

It will also be appreciated that the steps of the methods described herein may be carried out in any suitable order, or simultaneously where appropriate. The methods described herein may be performed by software in machine-readable form on a tangible storage medium or as a propagating signal.

Various modifications may be made to the above-described embodiment without departing from the scope of the invention.

The embodiments in the invention described with reference to the drawings comprise a computer apparatus and/or processes performed in a computer apparatus. However, the invention also extends to computer programs, particularly computer programs stored on or in a carrier adapted to bring the invention into practice.

The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal, which may be transmitted via an electrical or an optical cable or by radio or other means.

The invention is not limited to the embodiments hereinbefore described but may be varied in both construction and detail.

## Claims

1. A method of securing a stream of video surveillance data, comprising:

    extracting a region of interest from each frame in the stream of surveillance data;
    encoding the extracted region of interest;
    removing the encoded region of interest from each frame in a first copy of the stream of video surveillance data to create a non-sensitive stream of surveillance data;
    creating a sensitive stream of surveillance data comprising only the removed encoded region of interest; and
    separately processing the sensitive stream of data and the non-sensitive stream of data.

2. The method of claim 1 wherein separately processing comprises segmenting the encoded region of interest into a plurality of segments and assigning an identifier and a location to each segment of the plurality of segments.

3. The method of claim 2 further comprising applying a distribution function to the plurality of segments and assigning each segment of the plurality of segments to a separate storage location based on the distribution function.

4. The method of claim 3 wherein applying a distribution function comprises encrypting each segment of the plurality of segments.

5. The method of claim 2 or 3 wherein assigning each segment of the plurality of segments comprises transferring each segment of the plurality of segments to the assigned storage location.

6. The method of any previous claim wherein processing the sensitive stream of data comprises encrypting the sensitive stream of data and transferring the stream of data to a data storage location.

7. The method of any previous claim further comprising associating each extracted region of interest with a privacy level based on an auditing rule.

8. The method of any previous claim wherein encoding the extracted region of interest comprises defining a group of macroblocks corresponding to the region of interest and encoding the group of macroblocks independently of other groups of macroblocks corresponding to other regions of interest within a same frame.

9. A system for securing a stream of video surveillance data, comprising:

    means for implementing the method according to any of claims 1 to 8.

10. A method for retrieving a secured stream of video surveillance data, comprising:

    obtaining a non-sensitive stream of surveillance data and a sensitive stream of surveillance data;
    separately decoding the non-sensitive stream and the sensitive stream; and
    combining the decoded non-sensitive stream and the decoded sensitive stream.

11. The method of claim 10 wherein obtaining a sensitive stream of surveillance data comprises:

    retrieving a sensitive stream identifier;
    retrieving a segment location for each segment of the stream; and
    determining a location based on the segment location and the stream identifier.

12. The method of any of claims 10 or 11 further comprising retrieving a sensitive stream identifier and retrieving the sensitive stream from a data storage location.

13. A retrieval system for retrieving a secured stream of video surveillance data, comprising:

    means for implementing the method according to any of claims 10 to 12.

14. A retail management system comprising the security system according to claims 9 and a retrieval system according to claim 13.

15. A method of retail management comprising:

    obtaining a stream of surveillance data;
    extracting a region of interest from each frame in the stream of surveillance data;
    encoding the extracted region of interest;

removing the encoded region of interest from each frame in a first copy of the stream of video surveillance data to create a non-sensitive stream of surveillance data;

creating a sensitive stream of surveillance data comprising only the removed encoded region of interest; and

separately processing the sensitive stream of data and the non-sensitive stream of data

obtaining the stored non-sensitive stream of surveillance data and non sensitive stream of surveillance data;

separately decoding the non-sensitive stream and the sensitive stream; and

combining the decoded non-sensitive stream and the decoded and sensitive stream.

16. A computer readable storage medium carrying a computer program stored thereon which when executed by a processing module implements the method according to any of claims 1 to 8 or 10 to 12.

FIGURE 1.

Figure 2.

Figure 3

Figure 4

**501**
Identify Region of Interest(RoI).

**502**
Isolate the RoI from the rest of the video stream

**503**
Non-sensitive data stream

**504**
Sensitive data stream

Figure 5

**506**
Split the sensitive data stream into multiple segments (S) and label each segment with the stream identifier(ID) and location(L) within the stream

**508**
For each segment S apply distribution function (f) to calculate storage server number (N).
N = f(ID,L)

**510**
For each segment S generate an encryption key based on ID and L and encrypt the segment

**512**
Encrypted Segment

**514**
Transfer segment S to server N

13

601

Identify Region of Interest (RoI)

602
Isolate the RoI from the rest of the video
stream

603
Non-sensitive
data stream

Sensitive data
stream.     604

605
Generate an encryption key using the
stream ID, location ID and stream
generation date as seeds

606
Encrypt the sensitive stream

Figure 6

607
Encrypted stream

608
Transfer stream to
write only storage

**701**
Non-sensitive
data stream.

**702**
Retrieve sensitive stream identifier

**703**
Retrieve segments locations

**704**
Stream identifier (ID)
& segment location (L)

**705**
For each segment S apply distribution function
(f) to calculate storage server number (N)
N = f(ID,L)

**706**
For each segment S generate an
encryption key based on ID and L and
encrypt the segment

**707**
Transfer segment S
from server N

**708**
Encrypted
Segment

**709**
Decrypt segment

Figure 7

Figure 8

```
        800
   Non-sensitive
   data stream
```

```
              802
Retrieve sensitive stream identifier
```

```
              804
   Retrieve sensitive stream on
    portable storage medium
```

Europäisches
Patentamt

European
Patent Office

Office européen
des brevets

# EUROPEAN SEARCH REPORT

**Application Number**

EP 13 19 3198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/075842 A1 (LE BARZ CEDRIC [FR] ET AL) 31 March 2011 (2011-03-31) <br> * abstract; figures 5, 6 * <br> * paragraphs [0001], [0026] * <br> * paragraph [0047] - paragraph [0057] * <br> ----- | 1-16 | INV. <br> H04N19/132 <br> G08B13/196 <br> H04N19/167 <br> H04N19/174 <br> H04N21/2347 |
| X | FR 2 972 886 A1 (THALES SA [FR]) 21 September 2012 (2012-09-21) <br> * abstract; figures 2, 3 * <br> * page 1, line 16 - line 23 * <br> * page 8, line 4 - page 11, line 25 * <br> ----- | 1-16 | H04N21/4728 <br> H04N21/63 |
| X | WO 00/31964 A1 (ERICSSON TELEFON AB L M [SE]) 2 June 2000 (2000-06-02) <br> * abstract; figures 1, 4 * <br> * page 1 * <br> * page 3, paragraph 5 - page 4, paragraph 1 * <br> * page 6, paragraph 6 - page 8, paragraph 2 * <br> ----- | 1-16 | |
| A | US 8 433 092 B2 (LECOMTE DANIEL [FR] ET AL) 30 April 2013 (2013-04-30) <br> * abstract; figure 1 * <br> * column 3, line 2 - line 41 * <br> * column 6, line 4 - line 24 * <br> ----- | 1-16 | **TECHNICAL FIELDS SEARCHED (IPC)** <br> H04N <br> G08B |
| A,D | WO 2006/070249 A1 (EMITALL SURVEILLANCE S A [CH]; EBRAHIMI TOURADJ [CH]; DUFAUX FREDERIC) 6 July 2006 (2006-07-06) <br> * abstract; figures 1-5 * <br> * paragraph [0002] - paragraph [0006] * <br> * paragraph [0042] - paragraph [0050] * <br> ----- | 1-16 | |

The present search report has been drawn up for all claims

| Place of search | Date of completion of the search | Examiner |
|---|---|---|
| The Hague | 17 April 2014 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 3198

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2014

| Patent document cited in search report | | Publication date | Patent family member(s) | | Publication date |
|---|---|---|---|---|---|
| US 2011075842 | A1 | 31-03-2011 | EP | 2297951 A1 | 23-03-2011 |
| | | | FR | 2932046 A1 | 04-12-2009 |
| | | | MA | 32377 B1 | 01-06-2011 |
| | | | US | 2011075842 A1 | 31-03-2011 |
| | | | WO | 2009147183 A1 | 10-12-2009 |
| FR 2972886 | A1 | 21-09-2012 | NONE | | |
| WO 0031964 | A1 | 02-06-2000 | AU | 1902300 A | 13-06-2000 |
| | | | CA | 2352212 A1 | 02-06-2000 |
| | | | CN | 1333973 A | 30-01-2002 |
| | | | EP | 1142301 A1 | 10-10-2001 |
| | | | JP | 4659217 B2 | 30-03-2011 |
| | | | JP | 2002531015 A | 17-09-2002 |
| | | | SE | 9803979 A | 21-05-2000 |
| | | | US | 6931534 B1 | 16-08-2005 |
| | | | WO | 0031964 A1 | 02-06-2000 |
| US 8433092 | B2 | 30-04-2013 | EP | 1614290 A2 | 11-01-2006 |
| | | | FR | 2854019 A1 | 22-10-2004 |
| | | | US | 2006216003 A1 | 28-09-2006 |
| | | | US | 2010142621 A1 | 10-06-2010 |
| | | | WO | 2004095840 A2 | 04-11-2004 |
| WO 2006070249 | A1 | 06-07-2006 | CA | 2592511 A1 | 06-07-2006 |
| | | | EP | 1831849 A1 | 12-09-2007 |
| | | | EP | 2164056 A2 | 17-03-2010 |
| | | | US | 2008117295 A1 | 22-05-2008 |
| | | | WO | 2006070249 A1 | 06-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006070249 A